# EUROPEAN PATENT SPECIFICATION

(11) **EP 1 068 553 B1**
(45) Date of publication and mention of the grant of the patent: **14.11.2001**
(21) Application number: 99910662.8
(22) Date of filing: 12.03.1999
(51) Int. Cl.: G02B 27/01

(54) **OPTICAL APPARATUS FOR IMAGE OVERLAYING ONTO A REAL WORLD SCENE**
OPTISCHE VORRICHTUNG ZUR BILDÜBERLAPPUNG AUF EINE UMGEBUNGSKULISSE
APPAREIL OPTIQUE DE SUPERPOSITION D'IMAGES SUR UNE SCENE DU MONDE REEL

(30) Priority: 13.03.1998 GB 9805502
(43) Date of publication of application: 17.01.2001
(73) Proprietor: Businaro, Luca, 00189 Roma (IL)
(72) Inventor: BUSINARO, Tiziano, Vinicio, I-00189 Roma (IT); HUXFORD, Roger, Brian, Burgess Hill, West Sussex RH15 8HL (GB)
(74) Representative: Iannone, Carlo Luigi
(86) International application number: IT9900062
(87) International publication number: WO9946626

(56) References cited:
- EP-A- 0 011 024
- EP-A- 0 575 257
- EP-A- 0 592 318
- EP-A- 0 687 932
- WO-A-96/05532
- FR-A- 2 075 074
- US-A- 3 357 769
- US-A- 5 707 127

## Description

This invention relates to optical apparatus for image overlaying onto a real world scene. More especially, this invention relates to optical apparatus for allowing a pre-recorded three dimensional image to be overlaid on to a real world scene such that the image appears to be part of the real world scene.

Optical apparatuses for image overlaying onto a real world scene are known. The known apparatuses are in the form of a military helmet mounted display which utilises a complex optical system, and which does not use a pre-recorded three dimensional image contained in storage means in the form of a film cassette or a liquid crystal display. Optical apparatus in the form of virtual reality apparatus is also known but the virtual reality apparatus does not usually overlay a pre-recorded three dimensional image on to a real world scene. Examples of said apparatuses are discloses in WO-A-9 605 532, EP-A-0 575 257, EP-A-0 687 932, EP-A-0 011 024 and US-A-5 707 127.

It is an aim of the present invention to provide optical apparatus for image overlaying onto a real world scene, which optical apparatus is relatively simple and inexpensive to construct as compared with known military helmet mounted displays and with virtual reality apparatuses.

Accordingly, in one embodiment of the present invention there is provided optical apparatus for allowing a pre-recorded three dimensional image to be overlaid on to a real world scene as defined in claim 1.

The optical apparatus of the present invention may be especially useful in the fields of architecture and archeology. Thus, for example, in architecture, the optical apparatus may be advantageous to show the appearance and the effects of buildings, constructions, extensions, restorations and interior decorations in a chosen site before any work has actually started. Thus, for example, the effect of buildings in the form of houses, factories or shops may be shown in a chosen site before any construction has been started. Similarly, the effect of constructions such for example as bridges, towers and power plants can be seen and appreciated before work is actually started. Thus the use of the optical apparatus of the present invention could be used to facilitate and improve the decisions of town planners, or the acceptance of a particular building or commercial development by the public. Modifications and improvements may be more easily thought of using the optical apparatus of the present invention. All this may be achieved at an early stage during the design phase of the buildings, constructions and the like.

In the field of archeology, the optical apparatus of the present invention may allow ancient buildings to be seen in situ as they were before the destructive effects of time. Thus the optical apparatus of the present invention may facilitate the understanding of past civilisations, and the enjoyment of cultural visits to historical sites. The optical apparatus may stimulate the study of archeological re-constructions.

The optical apparatus of the present invention may be such that it includes adjustor means for adjusting the distance at which the pre-recorded three dimensional image is placed on the real world scene, thereby allowing the pre-recorded three dimensional image to be placed at will on a natural field of view at any distance from a user of the optical apparatus.

The image may be any suitable and appropriate image, for example of one or more objects and/or one or more persons and/or one or more animals.

Preferably, the optical apparatus is one in which the housing is such as to enable the optical apparatus to be hand-holdable for ease of use. Thus, for example, the housing may be in the form of a housing for a pair of binoculars. The housing may however be in other forms if desired.

In one embodiment of the invention, the optical apparatus may be one in which the viewing means comprises a beam splitter and reflective lenses, the beam splitter and the reflective lenses being spaced in air from each other. Such optical apparatus may be constructed to be light and inexpensive. Such optical apparatus will however have a relatively small horizontal field of field of 40°.

In another embodiment of the present invention, the optical apparatus is one in which the viewing means comprises a beam splitter and reflective lenses, the beam splitter and the reflective lenses being enclosed in a transparent plastics material. Such optical apparatus will be heavier and more costly to manufacture than the above mentioned air-spaced beam splitter and reflective lens arrangement. However, the solid system utilizing the transparent plastics material enclosure gives a wider horizontal field of view of 48°, and the optical apparatus is also potentially more robust. The transparent plastics material may be an acrylic material.

In both embodiments of the invention, the interocular spacing may be fixed, but the optical correction may be maintained over a large pupil size resulting in an effective interocular range of 53 - 75mm, which will satisfy 98% of the adult population. If the field of view is increased, the effective interocular range would be more restricted as the pupil size has to be scaled down to maintain the same level of optical correction. In practice this means that people at extremes of the interocular range are likely to notice some distortion of the image which they may find difficult to accommodate.

If desired, the optical apparatus may include focusing means for catering for situations where the real world scene is less than 15m distant from the viewer. In this situation, the overlaid image can appear to move with respect to the real world scene, due to parallax with the two images being at a slightly different focus.

The optical apparatus may be one in which the reflective lens has an inner concave surface coated with a partially reflecting coating to give a see-through ability.

The viewing means may include a field correction lens.

The pre-recorded three dimensional image is on roll film in the cassette. The roll film will usually contain a plurality of the pre-recorded three dimensional images with each image being composed of two slightly different perspectives of the scene in order to generate the three dimensional image. Alternatively, the pre-recorded three dimensional image may be in the form of two slides in the cassette, with each slide having a slightly different perspective of the scene in order to generate the three dimensional image. In a further alternative not part of the invention, the pre-recorded three dimensional image may be in the form of a glass transparency.

Embodiments of the invention will now be described solely by way of example and with reference to the accompanying drawings in which:
Figure 1 shows a person using optical apparatus of the present invention;
Figure 2 shows a pre-recorded three dimensional image overlaid onto a real world scene by the person shown in Figure 1 using the optical apparatus shown in Figure 1;
Figure 3 illustrates the use of optical apparatus with a 48° field of view;
Figure 4 is a perspective view of optical apparatus giving a 48° field of view and utilising cylindrical film guides;
Figure 5 is a plan view of the apparatus shown in Figure 4;
Figure 6 is a perspective view of optical apparatus giving a 48° field of view and utilising flat film guides; and
Figure 7 is a plan view of the optical apparatus shown in Figure 6.

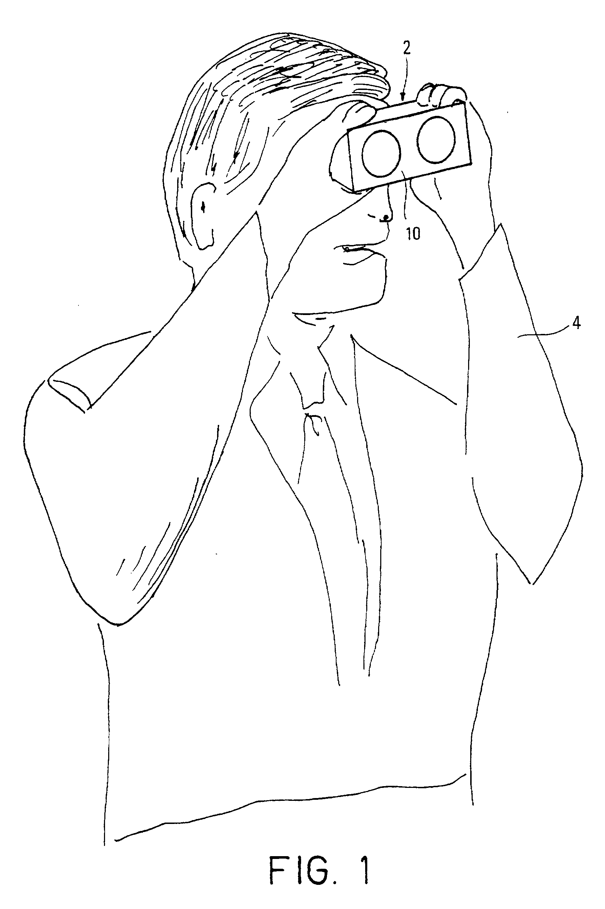

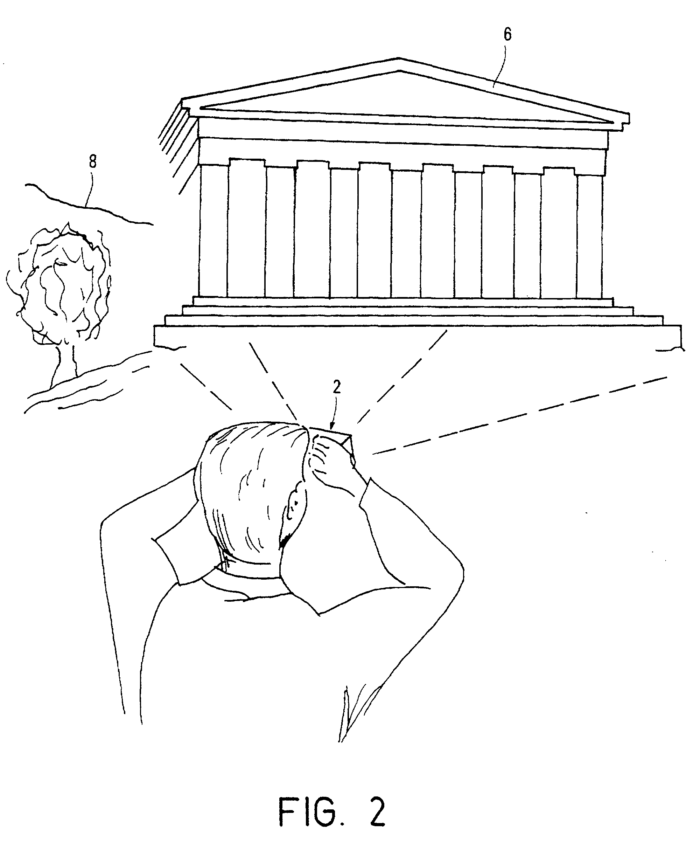

Referring to Figures 1 and 2, there is shown optical apparatus 2 being used by a person 4. The optical apparatus 2 allows a pre-recorded three dimensional image 6 to be overlaid onto a real world scene 8. As can be seen from Figure 2, the image 6 is of a temple and the real world scene 8 is of countryside. The image 6 appears to be part of the real world scene 8.

The optical apparatus 2 comprises a housing 10 which is a hand holdable housing 10 somewhat like a pair of binoculars. The optical apparatus 2 also includes storage means containing the image 6, and viewing means for viewing the real world scene 8 through the image 6 such that the image 6 is overlaid onto the real world scene 8. The storage means and the viewing means are not shown in Figures 1 and 2 for simplicity of illustration.

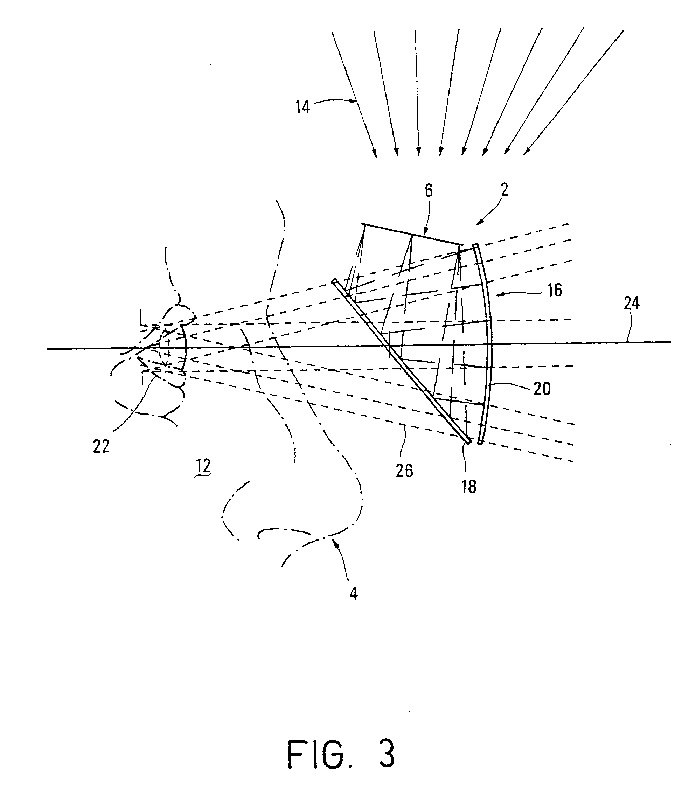

Figure 3 shows part of the face 12 of the person 4 utilising the optical apparatus 2 which has been constructed in the form of a slide viewer giving a 48° field of view. As can be seen from Figure 3, the optical apparatus 2 has the image 6 in the form of a slide. The slide surface may be plane or cylindrical. Illumination of the image 6 comes from overhead ambient light as shown by arrows 14.

Figure 3 shows viewing means 16 comprising a beam splitter 18 and a reflective lens 20. As can be seen from the annotation on Figure 3, the eye 22 of the person 4 is able to see a direct view of the outside world via the beam splitter 18 and the reflective lens 20 on line 24. The eye 22 is also able to see a combined view of the outside world and the image 6 on lines 26.

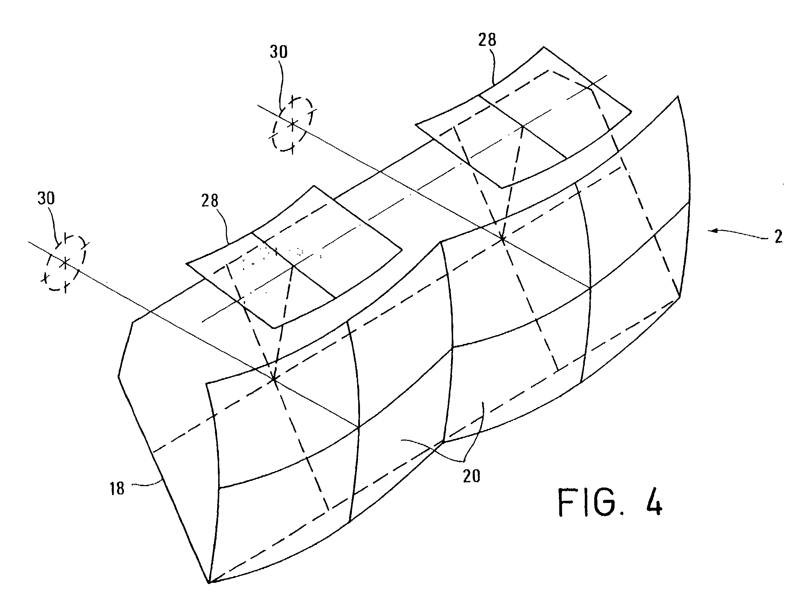

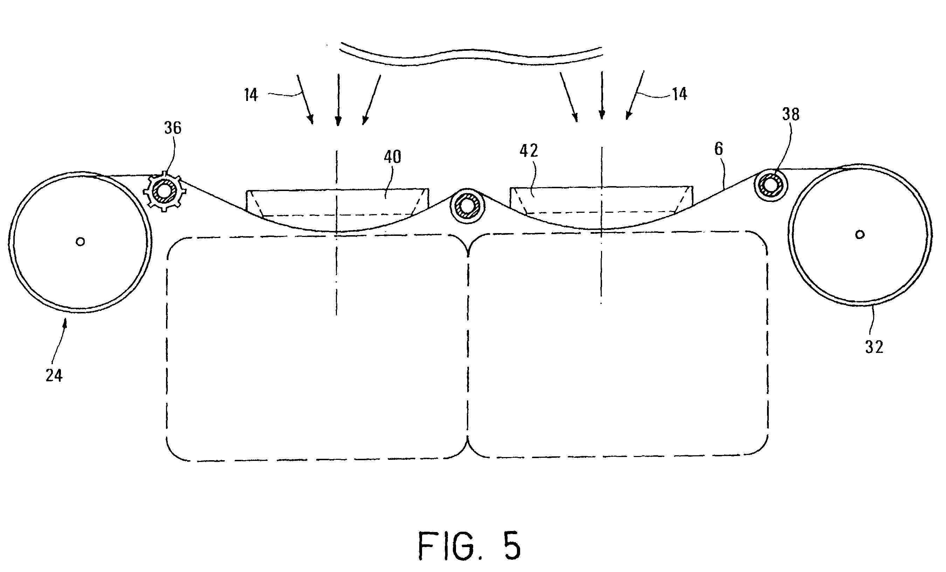

Referring to Figures 4 and 5, there is shown optical apparatus 2 utilising a 50:50 beam splitter 18 and two positions 28 which act as focal planes for images on slides (not shown). The slides are placed face upwards of the positions 28 in order to collect ambient overhead illumination.

Figure 4 shows the use of optical correction means 30. This optical correction means 30 over large pupils gives an effective interocular range of 53-75mm, thus catering for over 98% of the adult population whilst obviating the need for interocular adjustment.

The optical apparatus 2 utilises reflective lenses 20 as shown. The reflective lenses each have an internal surface which acts as a concave mirror to enable the image 6 to be set anywhere between 2.5m and infinity. The person 4 can see the outside world through the reflective lenses due to the use of a semi-transmissive coating on the internal surface of the reflective lenses 20. Thus the image 6 is able to be superimposed upon the real world. As can be seen from Figure 5, the image 6 is wound on a cassette 32 having a winding mechanism 24 and guide spools 36, 38. Light for illuminating the image 6 comes from overhead ambient illumination as indicated by the arrows 14. The image 6 on the film passes through cylindrical film guides 40, 42 which give a film gate aperture of 36 x 24mm. The cylindrical film guides 40, 42 have a cylinder radius of 50mm.

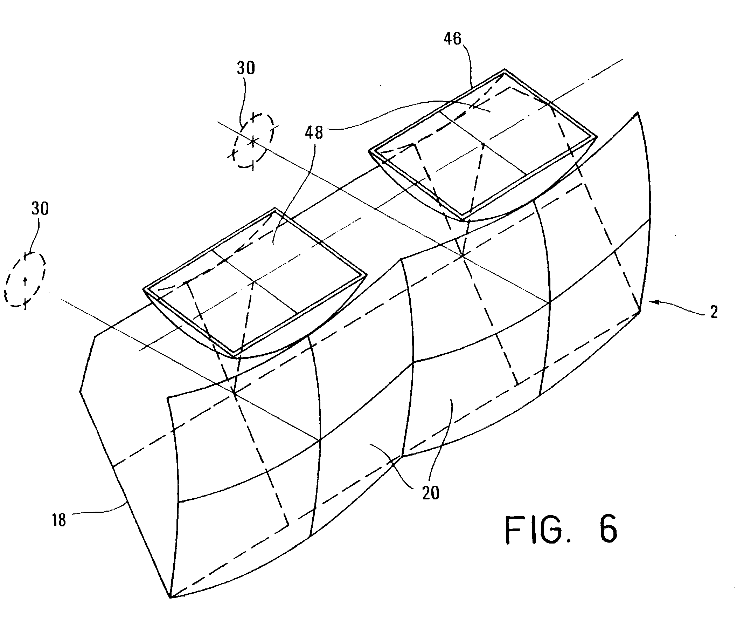

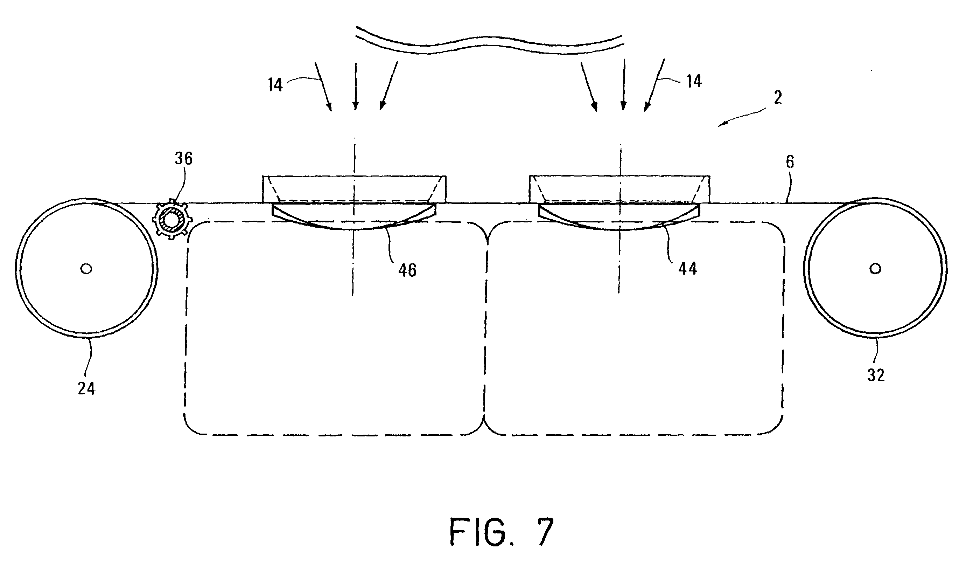

Figures 6 and 7 show optical apparatus 2 which gives a 48° field of view and which utilises flat film guides. As can be seen from Figures 6 and 7, the beam splitter 18, the reflective lenses 20 and the optical correction means 30 are the same as the optical apparatus shown in Figures 4 and 5.

In the various embodiments of the optical apparatus 2 shown in the drawings, the use of the reflective lenses 20 may give approximately 2 dioptres of over-correct field curvature, which most persons 4 can accommodate when using conventional optical instruments such as binoculars and magnifiers. However, where the image 6 of the slide is seen against the real world background or scene 8, the field of curvature could prove a little too excessive for some persons 4 comfortably to fuse the two images together. For this reason, the cylindrical slide surface and the field correction lens are shown which reduce the field curvature to approximately 0.6 and 1.0 dioptres respectively. In the drawings, the winding mechanism for the cylindrical gate system has been shown in a simplified manner and it is more complicated due to the additional role as required to hold the film in the correct location.

In high brightness environments, it may be necessary to dim the real world scene in order to enhance the contrast of the virtual image 6. This can be achieved using a polarising surface applied to the external surface of the reflective lenses 20. Alternatively, the reflective lenses 20 may be made of a photochromic material. With the use of the polarising surface, an adjustable voltage can be applied to the polarising surface in order to vary the degree of polarisation and hence the attenuation of the external scene brightness. If an adjustable voltage is required, then the optical apparatus 2 will normally be battery powered.

It will be appreciated from the drawings that the optical apparatus of the present invention has a see-through capability in order that virtual images can be overlaid onto a real world scene. The images can be of high resolution photographic quality, produced by computer aided design techniques. The optical apparatus 2 is preferably hand held and in its most simple embodiment does not require a source of power. The optical apparatus may give a minimum horizontal field of view of 40°. Long eye relief may be provided in order to cater for spectacle wearers. The optical apparatus may provide a large effective interocular range, for example of 53 - 75mm, with no adjustment being required. The optical apparatus provides good optical correction. A slide surface may be provided at the top of the apparatus, angled away from the person's forehead, in order to gain maximum collection of overhead ambient illumination.

It is to be appreciated that the embodiments of the invention described above with reference to the accompanying drawings have been given by way of example only and that modifications may be effected. Thus, in more complicated embodiments, a focus adjustment can be provided, for example for use in situations where the real world is relatively close to the viewer, for example less than 15m. In more complicated embodiments, not part of the invention, the slide containing the image may be replaced by a liquid crystal display. A polarising surface on the external surface of the reflecting lenses, or alternatively a photochromic material, may be used as a means of adjusting scene brightness as mentioned above. For indoor applications of low ambient brightness, artificial illumination may be provided. This artificial illumination may be external to the optical apparatus of the invention, or it may form part of the optical apparatus being, for example, battery operated. The optical apparatus operates such that an intermediate level of field curvature correction is desirable as the person 4 is actively overlaying the generated image 6 with a real world background for a visual effect rather than the determination of an accurate co-ordinate measurement.

Preferably, in the optical apparatus of the invention, the two images which give the three dimensional image are arranged to overlap entirely. However, if only a central part of the viewed image overlaps, then the three dimensional effect is limited to the overlapping area but a wider field of view is obtained.

## Claims

1. A hand holdable optical apparatus (2) for allowing a pre-recorded three dimensional image (6) to be overlaid on to a real world scene (8) such that the image appears to be part of the real world scene (8), which optical apparatus (9) comprises a hand holdable housing (10), storage means containing a film containing images for generating said pre-recorded three dimensional image (6), and viewing means (16) for viewing the real world scene (8) through the pre-recorded three dimensional image (6) such that the three dimensional image (6) is overlaid on to the real world scene (8), the storage means being a cassette (32) having a winding mechanism (24) and guide spools (36, 38) such that the images on the film pass through a pair of cylindrical film guides (40, 42), which give and the film gate apertures predefined film gate apertures, the cylindrical film guides having a predefined cylinder radius, said viewing means (16) comprises a beam splitter (18) and a pair of reflective lenses (20), each reflective lens corresponding to one film gate aperture, and the film gate apertures the reflective lenses being adjacent, located on the same side of the beam splitter (18) and spaced in air from each other, and the reflective lenses (20) have an inner concave surface coated with a partially reflecting coating to give a see-through ability so that the eyes of a user (4) are able to see via the beam splitter and the reflective lenses a combined view of the outside world and said pre-recorded three dimensional image.

2. A hand holdable optical apparatus (2) according to claim 1 and which is such that it includes adjustor means for adjusting the distance at the which pre-recorded three dimensional image (6) is placed on the real world scene (8), thus allowing the pre-recorded three dimensional image (6) to be placed at will in any part of a natural field of view of a user of the optical apparatus (2).

3. A hand holdable optical apparatus (2) according to claim 3 in which the housing (10) is in the form of a housing (10) for a pair of binoculars.

4. A hand holdable optical apparatus (2) according to any one of claims 1-4 in which the beam splitter (18) and reflective lenses (20) are in a transparent plastics material.

5. A hand holdable optical apparatus (2) according to claims 5 in which transparent plastics material is an acrylic material.

6. A hand holdable optical apparatus (2) according to any one of the preceding claims in which the viewing means includes a field correction lens.

## Patentansprüche

1. Trägbare optische Vorrichtung (2) zur Überlagerung eines räumlichen Bildes (6) auf eine reelle Umgebungskulisse (8), so dass das Bild ein Teil der Umgebungskulisse zu sein scheint, wobei diese optische Vorrichtung (2) ein trägbares Gehäuse (10), Mittel zur Aufbewahrung eines Bilder enthaltenden Films zur Erzeugung des vorgenannten voraufgenommenen räumlichen Bildes (6) und Sichtmittel (16) zur Beabachtung der reellen Umgebungskulisse (8) durch das voraufgenommene räumliche Bild (6) vorgesehen sind, so dass das räumliche Bild (8) auf die reelle Umgebungskulisse überlagert wird, wobei die Aufbewahrungsmittel aus einer Kassette (32) mit einer Wickeleinrichtung (24) und Führungsrollen (36,38) bestehen, sodass die im Flm enthaltenen Bilder durch ein Paar von zylindrischen Filmführungen (40,42) geführt werden, welche ein Paar von vorbestimmten Filmdurchgangsöffnungen bilden, wobei die zylindrische Filmführungen einen bestimmten Zylinderradius haben und die vorgenannten Sichtmittel (16) einen Bündel-Ablenker (18) und ein Paar von Reflexion-Linsen (20) aufwiesen, wobei jede Reflexionslinse der einen Filmdurchgangsöffunung zugeordnet ist und die Filmdurchgangsöffunungen und die Reflexionslinsen an der gleichen Seite des Bündelablenkers (18) angeordnet und voneinander räumlich beabstandet sind und wobei die Reflexionslinsen (20) eine innere konkave Fläche hat, die mit einer telweise reflektierenden Schicht versehen ist, um derselben eine Durchsichtigkeitsfähigkeit zu verleihen, so dass die Augen des Benützers in der Lage sind durch den Bündelablenker und die Reflexionslinsen eine zunsammengestxte Ansicht auf die reelle Umgebung und auf das vor aufgenommene räumliche Bild zu haben.

2. Trägbare optische Vorrichtung (2) nach Ausprüch 1, worin Nachstellemittel zur Nachstellung des Abstandes, mit dem das voraufgenommene räumliche Bild (6) an der reellen Umgebungskulisse (8) angeordnet ist, vorgesehen sind, so dass das voraufgenommene räumliche Bild (6) in jeder Stelle eines naturellen Sichtfeldes eines Benützers der optischen Vorrinchtung (2) angeordnet werden kann.

3. Trägbare optische Vorrichtung (2) nach Ausprüch 2, worin das Gehäuse (10) ein Gehäuse (10) eines Paares von binokularen Gläsern ist.

4. Trägbare optische Vorrichtung (2) nach je einem der vorhergehenden Ansprüche 1-3, worin der Bündelabweiser (18) und die Reflexionslinsen (20) aus einem durchsichtigen Kunststoff bestehen.

5. Trägbare optische Vorrichtung (2) nach Ansprüch 4, worin der durchsichtige Kunststoff ein akrylischer Kunststoff ist.

6. Trägbare optische Vorrichtung (2) nach je einem der vorhergehenden Ansprüche, worin das Sichtmittel eine Feldkorrektionslinse enthält.

## Revendications

1. Appareil optique portatif (2) de superposition d'images tridimensionneles prétournées (6) sur une scène du monde reel (8), de façon que l'image parait de faire partie intégrante de la scène du monde reel (8), ledit appareil (2) comprenant une enceinte portative (10), des moyens pour contenir un film de images pour engendre ladit image tridimensionnele prétournées (6) et des moyens de vision (16) pour observer la scène du monde reel (8) à travers l'image tridimensionnele prétourné (6), de façon que l'image tridimensionnele est superposée sur la scène du monde reel (8), le moyen pour contenir le film étant formé par un cassette (32) ayant un mécanisme d'enroulement (24) et galets de guidage (36,38) de façon que l'image du film passe sur un couple de couliseaux cylindriques (40,42) du film, qui forment des ouvertures préetablies pour le film, les couliseaux cylindrique du film ayant un préétabli rayon du cylindre, ladit moyen de vision (16) comprenant un déviateur de faisceau (18) et un couple de verres réfléchissants (20), chaque verre réfléchissant étant coordonné à une ouverture de passage du film et les ouvertures de passage du film et les verres réfléchissants étant placés sur le méme coté du déviateur de faisceau (18) et espacés dans l'air l'un de l'autre et le verres réléchissants ont une surface intérieure concave revêtue d'une couche patiallement réfléchante pour avoir la capacité de trasparence, de façon que les yeux d'un usager (4) peuvent voir à travers le déviateur de faisceau et les verres réfléchisants une vue combinée de la scène du monde reel et de l'image tridimensionnele prétoumée.

2. Appareil optique portatif (2) selon la revendication 1, dans laquel de moyens prévus pour ajuster la distance à laquelle l'image tridimensionnele prétournée est placée sur la scène du monde reel (8), de façon que l'image tridimensionnele prétournée peut être placée facultativement dans chaque partie du camp naturel de vue d'un usager de l'appareil optique (2).

3. Appareil optique portatif (2) selon la revendication 2, dans laquel l'enceinte (10) a la forme d'une enceinte pour une joumelle.

4. Appareil optique portatif (2) selon une quelconqque des revendiactions précédentes 1-4, dans Iaquel le déviateur de faisceau (18) et les verres réfléchissants (20) sont réalisés d'une matière plastique.

5. Appareil optique portatif (2) selon la revendication 5, dans laquel la matière plastique est une matière acrylique.

6. Appareil optique portatif (2) selon une quelconque des revendications précédentes, dans laquel le moyen de vue comprend un verre de correction du champ.
